# EUROPEAN PATENT APPLICATION

(11) **EP 3 144 868 A1**
(43) Date of publication of application: **22.03.2017**
(21) Application number: 16187631.3
(22) Date of filing: 07.09.2016
(51) Int. Cl.: G06Q 30/04, G06Q 40/00

(54) **TAX EXEMPTION PROCESSING SYSTEM, INFORMATION PROCESSING APPARATUS AND METHOD FOR SIMPLIFYING MANAGEMENT OF TAXABLE AMOUNT**

(30) Priority: 17.09.2015 JP 2015184146
(71) Applicant: Toshiba TEC Kabushiki Kaisha, Tokyo 141-0032 (JP)
(72) Inventor: YAMAGUCHI, Mitsuru, Shinagawa-ku, Tokyo 141-8562 (JP); NAKAZONO, Takeshi, Shinagawa-ku, Tokyo 141-8562 (JP)
(74) Representative: Takeuchi, Maya

(57) **Abstract**

A tax exemption processing system includes a storage device which stores a purchaser data file in which information relating to a sales of a commodity purchased by a purchaser identified by a purchaser code and a store code for identifying a tax-free store at which the commodity is purchased are associated with the purchaser code, an information processing apparatus which receives the purchaser data file associated with the purchaser code from the storage device if receiving the purchaser code of the purchaser who receives a refund on the commodity purchased, and calculates a taxable amount for each tax-free store based on the information relating to the sales of the commodity in the received purchaser data file to output the taxable amount calculated for each tax-free store.

## Description

### FIELD

Embodiments described herein relate generally to a tax exemption processing system suitable for a tax exemption system for a nonresident, an information processing apparatus used in the tax exemption system and a method for simplifying management of a taxable amount.

### BACKGROUND

In a case in which a manager who runs a general consumption tax exemption store sells a commodity to a nonresident such as a foreign tourist with a certain method, a commodity tax (consumption tax, liquor tax and the like) levied on the commodity is exempted. Recently, even in a specific commercial facility such as a shopping street, a shopping center, a tenant building and the like, instead of the manager, a third party who is an approved or admitted tax exemption procedure business provider can carry out procedures of a tax exemption measure relating to a sales of commodities to the nonresident in a procedure consignment type tax-free store by setting a tax exemption procedure counter in the facility.

In such a specific commercial facility, a purchaser who is a nonresident purchases a commodity at a price including an applicable tax at each tax-free store in the facility. Then, if the shopping in the facility is finished, the purchaser goes to the tax exemption procedure counter to carry out the procedures of the tax exemption measure to receive a refund of the applicable tax amount.

Specifically, the purchaser presents a receipt on which a detail of the purchased commodities are described and a certificate like a passport for certifying that he or she is a nonresident to the admitted tax exemption procedure business provider. The admitted tax exemption procedure business provider assorts the commodities (tax exemption applicable item) purchased by the purchaser into consumables and general goods other than the consumables on the basis of information of the receipt, totals tax excluded prices respectively for the consumables and the general goods and determines whether or not each assorted group is subject to the tax exemption. Then, if the group is subject to the tax exemption, the admitted tax exemption procedure business provider creates documents such as a purchase record slip, a purchaser written oath and a consumables warning label required for a tax exemption procedure.

The tax-free store has a liability to preserve the purchaser written oath for seven years from the day on which two months elapses from the next day of the last day of the taxable period to which the day on which the tax exemption sales is carried out at the tax-free store belongs, the purchaser written oath is created for each tax-free store at which the purchaser purchases the commodity.

The admitted tax exemption procedure business provider pastes the purchase record slip on the passport and then returns the passport to the purchaser. Further, in a case in which contents in a case or box in which the consumables are packaged cannot be grasped, the admitted tax exemption procedure business provider pastes a detail of the contents and a label for calling attention such as a note "Do not open the case until departure from the country" and then hands over the case to the purchaser. Furthermore, the admitted tax exemption procedure business provider refunds an applicable tax amount to the purchaser, receives a signature (sign) on each purchaser written oath from the purchaser and collects each purchaser written oath to which the sign is completed. Through the above, the procedures of the tax exemption measure are terminated. The collected purchaser written oaths are stored at each tax-free store.

In this way, the admitted tax exemption procedure business provider can collectively carry out the procedures of the tax exemption measure of the tax-free store in the specific commercial facility by arranging the tax exemption procedure counter in the specific commercial facility. Incidentally, it is considered that the taxable amount refunded to the purchaser is temporarily beard by the admitted tax exemption procedure business provider and thereafter collected from each tax-free store. However, there is a problem that the admitted tax exemption procedure business provider has to manage the amount required to be collected for each tax-free store, and thus, the burden of the admitted tax exemption procedure business provider is increased.

To solve such problems, there is provided a tax exemption processing system, comprising: an information processing apparatus and a storage device, wherein
the storage device includes:
a purchaser data file configured to store information relating to a sales of a commodity purchased by a purchaser identified by a purchaser code and a store code for identifying a tax-free store at which the commodity is purchased in association with the purchaser code; and
the information processing apparatus includes:
a first reception module configured to receive from the storage device the purchaser code of the purchaser who receives a refund on the commodity purchased;
a second reception module configured to receive the purchaser data file associated with the purchaser code received by the first reception module from the storage device;
a calculation module configured to calculate a taxable amount for each tax-free store based on the information relating to the sales of the commodity in the purchaser data file received by the second reception module; and
an output module configured to output the taxable amount calculated for each tax-free store by the calculation module.

Preferably, the output module is equipped with a module configured to send a data indicating the taxable amount calculated for each tax-free store to the storage device; and
the storage device is further equipped with a totalization module configured to total the taxable amount for a prescribed period by each tax-free store according to the data sent from the information processing apparatus.

Preferably still, the 3 tax exemption processing system further comprises
an issuing module configured to issue a collection report indicating the taxable amount which is collected from each tax-free store based on the data totaled by the totalization module.

The invention also relates to an information processing apparatus, comprising:
a first reception module configured to receive a purchaser code for identifying a purchaser who receives a refund on a commodity purchased;
a second reception module configured to receive a purchaser data file associated with the purchaser code received by the first reception module from a storage device which includes the purchaser data file in which information relating to a sales of the commodity purchased by the purchaser identified by the purchaser code is stored together with a store code for identifying a tax-free store at which the commodity is purchased in association with the purchaser code;
a calculation module configured to calculate a taxable amount for each tax-free store based on the information relating to the sales of the commodity in the purchaser data file received by the second reception module; and
an output module configured to output the taxable amount calculated by each tax-free store by the calculation module.

Preferably, the output module is equipped with a module configured to send a data indicating the taxable amount calculated for each tax-free store to the storage device.

The invention further relates to a method for simplifying the management of taxable amount, including:
receiving a purchaser code for identifying a purchaser who receives a refund on a commodity purchased;
receiving a purchaser data file, associated with the received purchaser code, in which information relating to a sales of the commodity purchased by the purchaser identified by the purchaser code is stored together with a store code for identifying a tax-free store at which the commodity is purchased in association with the purchaser code;
calculating a taxable amount for each tax-free store based on information relating to the sales of the commodity in the received purchaser data file; and
outputting the taxable amount calculated for each tax-free store.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic view illustrating the whole configuration of a tax exemption processing system according to an embodiment;
Fig. 2 is a block diagram illustrating the circuit configuration of main sections of a POS terminal contained in the tax exemption processing system of Fig. 1;
Fig. 3 is a block diagram illustrating the circuit configuration of main sections of a reception terminal contained in the tax exemption processing system of Fig. 1;
Fig. 4 is a block diagram illustrating the circuit configuration of main sections of a settlement terminal contained in the tax exemption processing system of Fig. 1;
Fig. 5 is a schematic diagram illustrating the data structure of a data table formed in a RAM in the settlement terminal of Fig. 4;
Fig. 6 is a block diagram illustrating the circuit configuration of main sections of a management server contained in the tax exemption processing system of Fig. 1;
Fig. 7 is a schematic view illustrating the data structure of a tax exemption commodity database stored in the management server of Fig. 6;
Fig. 8 is a schematic view illustrating the data structure of a purchaser data file stored in the management server of Fig. 6;
Fig. 9 is a schematic view illustrating the data structure of a purchase record stored in the purchaser data file of Fig. 8;
Fig. 10 is a schematic view illustrating the data structure of a totalization table stored in the management server of Fig. 6;
Fig. 11 is a flowchart illustrating main procedures of an information processing carried out by a CPU of the reception terminal according to a control program;
Fig. 12 is a flowchart illustrating main procedures of an information processing carried out by a CPU of the POS terminal according to a control program;
Fig. 13 is a flowchart illustrating main procedures of an information processing carried out by a CPU of the settlement terminal according to a control program;
Fig. 14 is a flowchart illustrating procedures of a taxable amount calculation processing in Fig. 13;
Fig. 15 is a flowchart illustrating main procedures of an information processing carried out by a CPU of the management server at the time of receiving a tax exemption receiving data;
Fig. 16 is a flowchart illustrating main procedures of an information processing carried out by the CPU of the management server at the time of receiving a tax exemption item purchase data;
Fig. 17 is a flowchart illustrating main procedures of an information processing carried out by the CPU of the management server at the time of receiving a tax exemption settlement data;
Fig. 18 is a flowchart illustrating procedures of an interruption processing executed by the CPU of the management server; and
Fig. 19 is a schematic view illustrating an example of a collection report for each tax-free store.

### DETAILED DESCRIPTION

In accordance with an embodiment, a tax exemption processing system includes an information processing apparatus and a storage device. The storage device includes a purchaser data file for storing information relating to a sales of a commodity purchased by a purchaser identified by a purchaser code and a store code for identifying a tax-free store at which the commodity is purchased in association with the purchaser code. The information processing apparatus includes a first reception module, a second reception module, a calculation module and an output module. The first reception module receives the purchaser code of the purchaser who receives a refund on the commodity purchased. The second reception module receives the purchaser data file associated with the purchaser code received by the first reception module from the storage device. The calculation module calculates a taxable amount for each tax-free store based on the information relating to the sales of the commodity in the purchaser data file received by the second reception module. The output module outputs the taxable amount calculated for each tax-free store by the calculation module.

Hereinafter, an embodiment of the tax exemption processing system which can simplify management of the taxable amount collected from each tax-store is described with reference to the accompanying drawings.

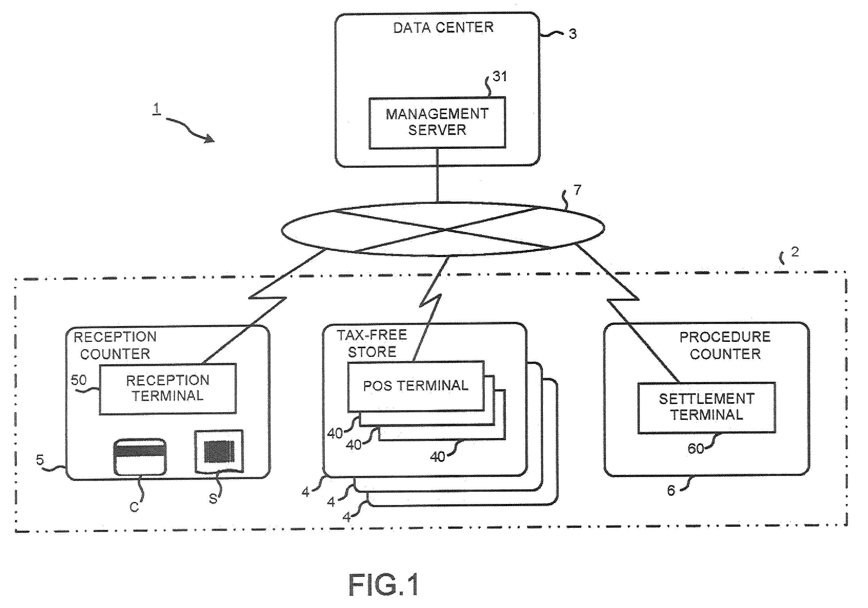

Fig. 1 is a schematic view illustrating the whole configuration of a tax exemption processing system 1. The tax exemption processing system 1 is constituted between a specific commercial facility 2 (hereinafter, referred to as a facility 2) to which a procedure consignment type tax exemption system is applied and a data center 3 managed by an admitted tax exemption procedure business provider of the facility 2 or a corporate entity that receives a consignment from the business provider.

The facility 2 is an aggregate of stores such as a shopping street, a shopping center, a tenant building and the like. Each store is approved by a ministry concerned as a procedure consignment type consumption tax exemption store 4 (hereinafter, referred to as a tax-free store 4). In each tax-free store 4, well-known POS (Point Of Sales) terminals 40 each operate as a checkout device. The number of the POS terminals 40 in each store is not specifically limited. Further, the facility 2 may be a general consumption tax exemption store, i.e., a tax-free store constituted by only one store.

In the facility 2, a tax exemption reception counter 5 (hereinafter, referred to as a reception counter 5) and a tax exemption procedure counter 6 (hereinafter, referred to as a procedure counter 6) managed by the admitted tax exemption procedure business provider are arranged. The reception counter 5 and the procedure counter 6 may be separately arranged at different locations or the same location in the facility 2.

The reception counter 5 is a location at which a nonresident such as a foreign tourist receives issuance of a tax exemption card C or a tax exemption sheet S necessary for a transaction of commodities with tax exemption before the nonresident shops in the facility 2. At the reception counter 5, a reception terminal 50 for issuing the tax exemption card C or the tax exemption sheet S operates. The reception terminal 50 is a form of an information processing apparatus functioning as a reception device. The tax exemption card C is a card medium (a magnetic card, an IC card and the like) capable of holding information magnetically or electrically. The tax exemption sheet S is issued by printing required items on, for example, a receipt paper.

The procedure counter 6 is a location at which the nonresident who shops at the tax-free store 4 in the facility 2 carries out the procedures of the tax exemption measure. Jobs of the procedures include a refund job of the commodity tax (consumption tax, liquor tax and the like) paid for the commodities purchased by the nonresident at the tax-free store 4, an issuing job of documents such as a purchaser written oath, a purchase record slip and a consumables warning label that are necessary for the tax exemption measure and a collection job of the purchaser written oath. At the procedure counter 6, the settlement terminal 60 operates. The settlement terminal 60 is a form of the information processing apparatus functioning as a settlement apparatus.

The data center 3 is arranged for at least one facility 2 with the purpose of managing data relating to the procedures of the tax exemption measure carried out in the facility 2 and storing data processed through the procedures of the tax exemption measure. One data center may be commonly used for a plurality of facilities 2 to manage the data relating to the procedures of the tax exemption measure carried out in the plural facilities 2 and store the data processed through the procedures of the tax exemption measure. In the data center 3, a management server 31 operates to manage the data relating to the procedures of the tax exemption measure and the data processed through the procedures of the tax exemption measure.

In Fig. 1, the management server 31 is arranged in the data center 3; however, the management server 31 may be arranged in the facility 2 and connected with a network to manage data.

The tax exemption processing system 1 includes a computer network 7 (hereinafter, referred to as a network 7) such as an Internet. Then, the tax exemption processing system 1 is constructed by connecting the management server 31 in the data center 3 with each of the POS terminal 40, the reception terminal 50 and the settlement terminal 60 in the facility 2 via the network 7 to perform a mutual communication with one the other.

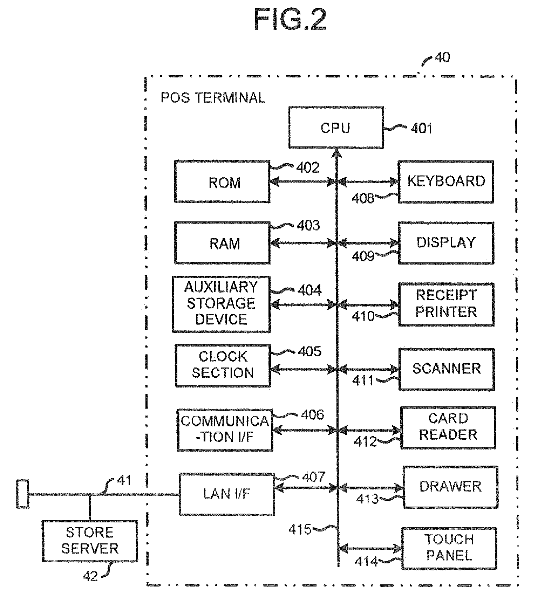

Fig. 2 is a block diagram illustrating the circuit configuration of main sections of the POS terminal 40. The POS terminal 40 is provided with a CPU (Central Processing Unit) 401, a ROM (Read Only Memory) 402, a RAM (Random Access Memory) 403, an auxiliary storage device 404, a clock section 405, a communication interface 406, a LAN interface 407, a keyboard 408, a display 409, a receipt printer 410, a scanner 411, a card reader 412, a drawer 413 and a touch panel 414. In the POS terminal 40, the CPU 401 is connected with the ROM 402, the RAM 403, the auxiliary storage device 404, the clock section 405, the communication interface 406, the LAN interface 407, the keyboard 408, the display 409, the receipt printer 410, the scanner 411, the card reader 412, the drawer 413 and the touch panel 414 directly through a system transmission path 415 such as an address bus line, a data bus line, a control signal line and the like or indirectly through an input and output circuit.

In the POS terminal 40, a computer is constituted by the CPU 401, the ROM 402, the RAM 403 and the auxiliary storage device 404 and the system transmission path 415 for connecting them.

The CPU 401 acts as the main unit of the computer. The CPU 401 controls each section for realizing various functions as the POS terminal 40 according to an operating system and application programs.

The ROM 402 acts as the main memory unit of the computer. The ROM 402 stores the foregoing operating system and application programs. There is a case in which the ROM 402 stores data required for execution of a processing by the CPU 401 to control each section.

The RAM 403 acts as the main memory unit of the computer. The RAM 403 stores data required for executing a processing by the CPU 401. Further, the RAM 403 is also used as a working area in which information is properly rewritten by the CPU 401.

The auxiliary storage device 404 acts as an auxiliary memory unit of the computer. The auxiliary storage device 404 is, for example, an EEPROM (Electric Erasable Programmable Read-Only Memory), an HDD (Hard Disc Drive), or an SSD (Solid State Drive). The auxiliary storage device 404 stores data used by the CPU 401 which carries out various processing and data generated through the processing carried out by the CPU 401. There is a case in which the auxiliary storage device 404 stores the foregoing application programs.

The clock section 405 functions as a time information source of the POS terminal 40. The CPU 401 counts current date and time on the basis of the time information counted by the clock section 405.

The communication interface 406 is connected with the network 7. The communication interface 406 carries out a data communication with the management server 31 of the data center 3 according to a preset protocol via the network 7.

The LAN interface 407 is connected with a LAN 41 formed in the store. The LAN 41 may be a wired LAN or a wireless LAN. In addition to the POS terminal 40, the LAN 41 is connected with a store server 42 for managing a commodity database in which various data relating to commodities (containing tax exemption commodities and taxable commodities) sold in the store is stored. The LAN interface 407 carries out a data communication with the store server 42 according to the preset protocol via the LAN 41.

The keyboard 408 is a dedicated input device equipped with various function keys such as a multiplication key, a subtotal key and a closing key in addition to numeric keys for setting numerical values of points and amount. Necessary functions in the POS terminal 40 may be assigned to keys on a general keyboard. The closing key is used to declare the close of the registration of a commodity transaction by an operator. The commodity transaction refers to an act of carrying out a trade of commodities with one purchaser.

The display 409 is a display device for displaying a commodity name, a price, a total amount and a change amount. The display 409 includes a display for store clerk who operates the POS terminal 40 and a display for purchaser.

Further, a touch panel formed in combination with the input device and the display device may be applied instead of the keyboard 408 and the display 409.

The receipt printer 410 prints a receipt data indicating details of one commodity transaction on a predetermined receipt paper. The printed receipt paper is cut off by a cutter to be issued as a purchase details receipt and handed over to the purchaser.

The scanner 411 optically reads a code symbol such as a barcode, a two-dimensional data code and the like. A code symbol obtained by converting a unique commodity code of each commodity to a barcode is attached to each commodity. The scanner 411 is used to read the code symbol attached to the commodity purchased by the purchaser. Further, the barcode is printed on the tax exemption sheet S, and the scanner 411 is also used to read the barcode thereon.

The card reader 412 reads a data recorded on a card medium. In a case in which the card medium is a magnetic card, the card reader 412 is a magnetic card reader. In a case in which the card medium is an IC card, the card reader 412 is an IC card reader. The IC card reader may be a contact type reader or a non-contact type reader. The card reader 412 is used to read data recorded in a credit card or a point card used by the purchaser. The card reader 412 is also used to read data recorded in the tax exemption card C. Thus, if the tax exemption card C is the magnetic card, the card reader 412 is the magnetic card reader. If the tax exemption card C is the IC card, the card reader 412 is the IC card reader.

The drawer 413, used to house cash and the like therein, carries out an opening operation in response to an opening signal from the CPU 401. With opening the drawer 413, it is carried out to deliver cash such as a deposited money or change between the store clerk and the purchaser. Further, the POS terminal 40 may be connected with an automatic change dispensing machine instead of the drawer 413. In this case, the automatic change dispensing machine dispenses cash as change on the basis of a dispensing data from the CPU 401.

The touch panel 414 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 401. A well-known device can be used as the touch sensor.

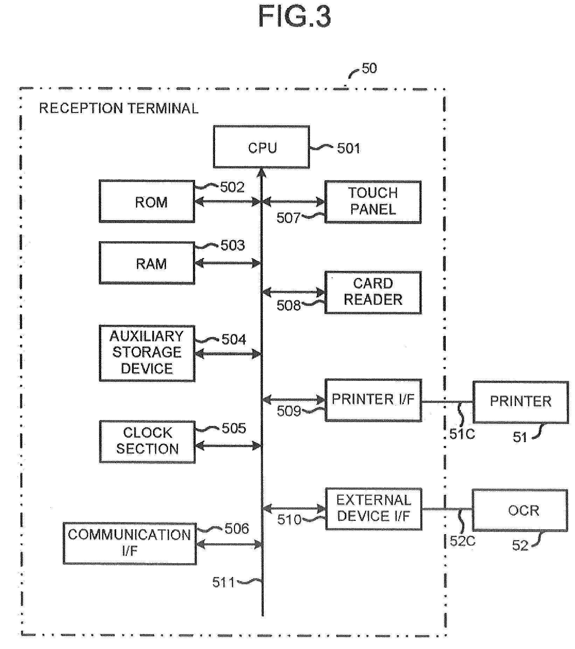

Fig. 3 is a block diagram illustrating the circuit configuration of main sections of the reception terminal 50. The reception terminal 50 is provided with a CPU 501, a ROM 502, a RAM 503, an auxiliary storage device 504, a clock section 505, a communication interface 506, a touch panel 507, a card reader 508, a printer interface 509 and an external device interface 510. In the reception terminal 50, the CPU 501 is connected with the ROM 502, the RAM 503, the auxiliary storage device 504, the clock section 505, the communication interface 506, the touch panel 507, the card reader 508, the printer interface 509 and the external device interface 510 directly through a system transmission path 515 such as an address bus line, a data bus line, a control signal line and the like or indirectly through an input/output circuit.

The CPU 501, the ROM 502, the RAM 503, the auxiliary storage device 504, the clock section 505 and the communication interface 506 of the reception terminal 50 are the same as those of the POS terminal 40.

The touch panel 507 contains a display device and a touch sensor. The display device displays a GUI screen and the like. For example, a well-known device such as a color LCD can be used as the display device. The touch sensor is overlaid on the display surface of the display device. The touch sensor detects a touch position of the operator on the display surface of the display device and sends the position information to the CPU 501. A well-known device can be used as the touch sensor.

The card reader 508 reads the data recorded in the card medium. In a case in which the card medium is a magnetic card, the card reader 508 is a magnetic card reader. In a case in which the card medium is an IC card, the card reader 508 is an IC card reader. The IC card reader may be a contact type reader or a non-contact type reader. The card reader 508 is used to read the data recorded in the tax exemption card C. Thus, if the tax exemption card C is the magnetic card, the card reader 508 is the magnetic card reader. If the tax exemption card C is the IC card, the card reader 508 is the IC card reader.

The printer interface 509 carries out a data communication with the printer 51 detachably connected therewith via a communication cable 51C according to a preset protocol. The printer 51 is used to print the tax exemption sheet S. A thermal printer or an impact dot printer can be applied as this kind of the printer 51. The reception terminal 50 may be constituted by a well-known POS terminal, and a receipt printer mounted in the POS terminal may be a printer for printing the tax exemption sheet S.

The external device interface 510 carries out a data communication with an OCR (Optical Character Reader) 52 detachably connected therewith via the communication cable 52C according to the preset protocol. The OCR 52 is used to optically read information (category of a passport, name, passport number, nationality, date of birth, sex and expiration date of the passport) recorded on, for example, a passport (certificate) for certifying whether or not the purchaser is a nonresident. The certificate is not limited to the passport. For example, in an area like Okinawa Prefecture where a specific tax exemption system is executed, the certificate may be an airline ticket or a boarding card of an air-plane departing from the area.

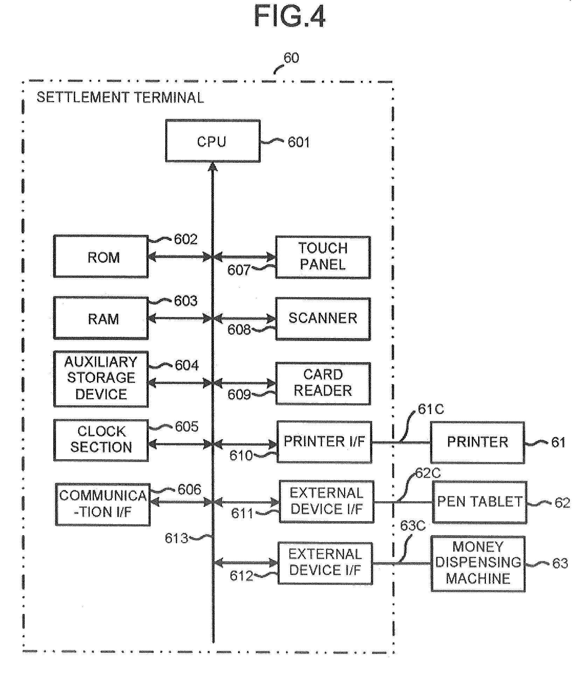

Fig. 4 is a block diagram illustrating the circuit configuration of main sections of the settlement terminal 60. The settlement terminal 60 is provided with a CPU 601, a ROM 602, a RAM 603, an auxiliary storage device 604, a clock section 605, a communication interface 606, a touch panel 607, a scanner 608, a card reader 609, a printer interface 610 and two external device interfaces 611 and 612. In the settlement terminal 60, the CPU 601 is connected with the ROM 602, the RAM 603, the auxiliary storage device 604, the clock section 605, the communication interface 606, the touch panel 607, the scanner 608, the card reader 609, the printer interface 610 and the external device interfaces 611 and 612 directly through a system transmission path 613 such as an address bus line, a data bus line, a control signal line and the like or indirectly through an input/output circuit.

The CPU 601, the ROM 602, the RAM 603, the auxiliary storage device 604, the clock section 605 and the communication interface 606 of the settlement terminal 60 are the same as those of the POS terminal 40 and the reception terminal 50.

The touch panel 607 contains a display device and a touch sensor. The display device displays a GUI screen and he like. For example, a well-known device such as a color LCD can be used as the display device. The touch sensor is overlaid on the display surface of the display device. The touch sensor detects a touch position of the operator on the display surface of the display device and sends the position information to the CPU 601. A well-known device can be used as the touch sensor.

The scanner 608 optically reads a code symbol such as a barcode, a two-dimensional data code and the like. The scanner 608 is used to read the barcode printed on the tax exemption sheet S.

The card reader 609 reads the data recorded in the card medium. In a case in which the card medium is a magnetic card, the card reader 609 is a magnetic card reader. In a case in which the card medium is an IC card, the card reader 609 is an IC card reader. The IC card reader may be a contact type reader or a non-contact type reader. The card reader 609 is used to read the data recorded in the tax exemption card C. Thus, if the tax exemption card C is the magnetic card, the card reader 609 is the magnetic card reader. If the tax exemption card C is the IC card, the card reader 609 is the IC card reader.

The printer interface 610 carries out data communication with a printer 61 detachably connected therewith via a communication cable 61C according to a preset protocol. The printer 61 is used to print the document such as the purchase record slip, the consumables warning label and the like. The printer 61 is used to print a taxable amount collection report 200 described later for each tax-free store. A thermal printer or an impact dot printer can be used as this kind of the printer 61. The settlement terminal 60 may be constituted by a well-known POS terminal, and a receipt printer mounted in the POS terminal may be a printer for printing the foregoing documents.

The external device interface 611 carries out a data communication with a pen tablet 62 detachably connected therewith via a communication cable 62C according to a preset protocol. The pen tablet 62 reads a position of an electronic pen on a plate-like tablet main body with a sensor built in the tablet main body, and is a detection device for detecting a locus of the electronic pen and electronically acquiring the locus as writing information of a user. A well-known pen tablet such as a liquid crystal pen tablet can be applied as the pen tablet 62. The pen tablet 62 is used to record the electronic signature (electronic sign) of the purchaser in the purchaser written oath (electronic document).

The external device interface 612 carries out a data communication with a money dispensing machine 63 detachably connected therewith via a communication cable 63C according to a preset protocol. The money dispensing machine 63 includes a stocker for storing bills and coins by denominations and a dispensing mechanism for dispensing cash of the amount corresponding to the dispensing data from the stocker to a dispensing port. The money dispensing machine 63 dispenses the taxable amount refunded to the purchaser (nonresident) who purchases the tax exemption commodity at a tax-included price at the tax-free store 4 in the facility 2 and finishes the tax exemption procedure at the procedure counter 6. The money dispensing machine 63 may be a well-known automatic change dispensing machine linked with the POS terminal. Instead of the money dispensing machine 63, the external device interface 612 may be connected with a drawer storing the cash and control the drawer to carry out an opening operation in response to an opening signal from the CPU 601. In this case, by displaying the taxable amount on the touch panel 607, a person in charge of the job at the procedure counter 6 gathers cash equivalent to the taxable amount from the drawer and hands over the cash to the purchaser.

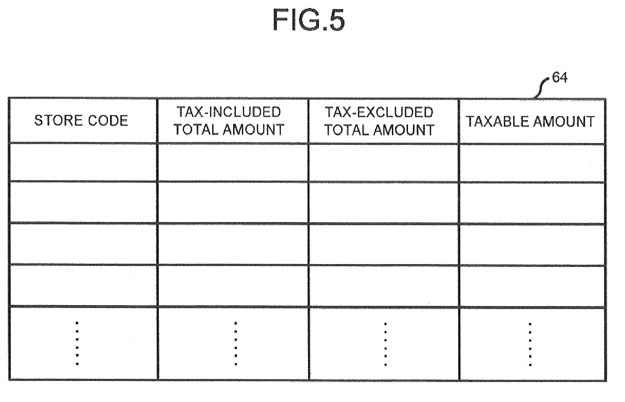

The settlement terminal 60 with such a configuration forms a data table 64 having a data structure as shown in Fig. 5 on the RAM 603. The data table 64 is used to calculate the paid amount at each store regarding the taxable amount refunded to the purchaser (nonresident) who finishes the tax exemption procedures at the procedure counter 6. In the data table 64, a store code column, a total of tax-included amount column, a total of tax-excluded amount column and a taxable amount column are arranged in one direction (row direction). Then, in each column, the store code, the total of tax-included amount, the total of tax-excluded amount and the taxable amount are stored in order from the first row.

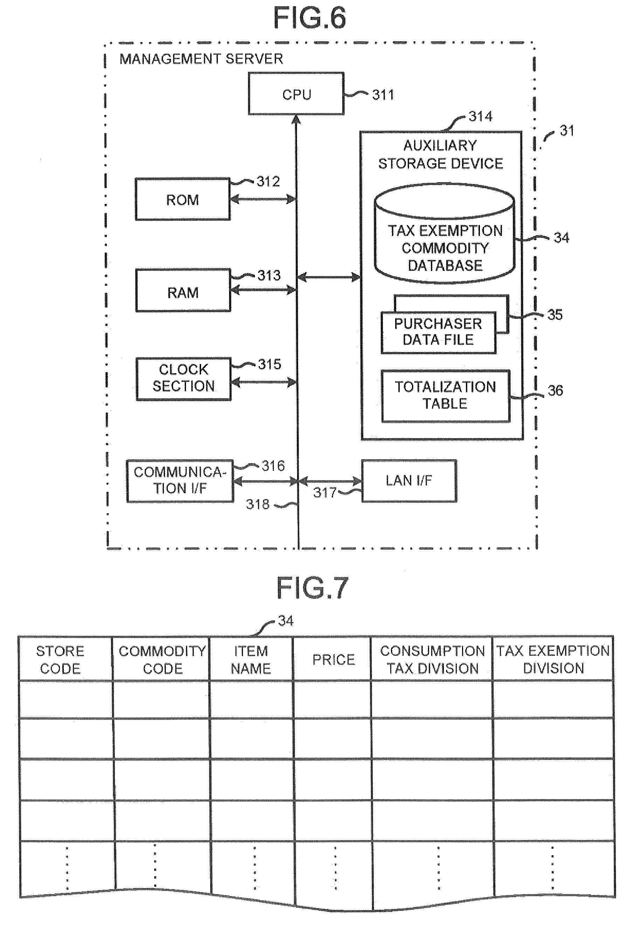

Fig. 6 is a block diagram illustrating the circuit configuration of main sections of the management server 31. The management server 31 is provided with a CPU 311, a ROM 312, a RAM 313, an auxiliary storage device 314, a clock section 315, a communication interface 316 and a LAN interface 317. In the management server 31, the CPU 311 is connected with the ROM 312, the RAM 313, the auxiliary storage device 314, the clock section 315, the communication interface 316 and the LAN interface 317 directly through a system transmission path 318 such as an address bus line, a data bus line, a control signal line and the like or indirectly through an input/output circuit.

The CPU 311, the ROM 312, the RAM 313, the auxiliary storage device 314, the clock section 315 and the communication interface 316 of the management server 31 are the same as those of the POS terminal 40, the reception terminal 50 and the settlement terminal 60.

The LAN interface 317 is connected with a LAN 33 formed in the data center 3. The LAN 33 may be a wired LAN or a wireless LAN.

The management server 31 with such a configuration can store a tax exemption commodity database 34, a purchaser data file 35 and a totalization table 36 in the auxiliary storage device 314. The tax exemption commodity database 34 stores data relating to a commodity sold to a nonresident at each tax-free store 4 at which the commodity tax is exempted, i.e., a tax exemption commodity.

The tax exemption commodities include the consumables such as foodstuffs, beverages, medicines, cosmetics and the like, and the general goods other than the consumables. At present, in Japan, if sales total amount of one day at the tax-free store 4 in the consumables purchased by the same nonresident in the same facility 2 is in a range from 5,000 yen to 500,000 yen, the consumables are subjected to the tax exemption. In other words, 5,001 yen and 5,000 yen are set as tax exemption points of the consumables. On the other hand, in a case in which the sales total amount calculated in the same way as stated above of the general goods exceeds 10,000 yen, the general goods are subjected to the tax exemption. In other words, 10,001 yen is set as a tax exemption point of the general goods.

Fig. 7 is a schematic view illustrating a part of data stored in the tax exemption commodity database 34. As shown in Fig. 7, in the tax exemption commodity database 34, a data record including items such as a store code, a commodity code, an item name, a price, a consumption tax classification and a tax exemption category is stored. The store code is a unique code set for each tax-free store 4 to individually identify each tax-free store 4. The commodity code is a unique code set for each commodity to individually identify each commodity (containing the tax exemption commodity and the non-tax exemption commodity) sold in a tax-free store 4 identified by a corresponding store code. In the meantime, the commodity codes of the same kind of the commodities may be common in each tax-free store 4 or different in each tax-free store 4. Further, it may be not prevented that the same commodity code is attached to different kinds of the commodities in the different tax-free stores 4.

The item name is a name of the commodity identified by the corresponding commodity code. The price is a unit price (tax-included price or tax-excluded price) of the commodity identified by the corresponding commodity code. In the meantime, the item names or the prices of the same kind of the commodities may be common in each tax-free store 4 or different in each tax-free store 4.

The consumption tax classification is information for classifying whether the commodity identified by the corresponding commodity code is defined with a tax-included or a tax-excluded, and furthermore classifying how much consumption tax rate is applied. In the meantime, the consumption tax classification for the same kind of the commodities may be common in each tax-free store 4 or different in each tax-free store 4. Further, the consumption tax classification may be different even for each commodity handled in the same tax-free store 4.

The tax exemption category is information for classifying whether the commodity identified by the corresponding commodity code is defined as the consumables, the general goods other than the consumables or a commodity not subject to the tax exemption. For example, in a case in which the category is "1", the CPU 311 of the management server 31 recognizes that the commodity corresponding to the category belongs to the consumables. Similarly, in a case in which the category is "2", the CPU 311 recognizes that the commodity corresponding to the category belongs to the general goods, and in a case in which the category is "3", the CPU 311 recognizes that the commodity corresponding to the category belongs to the commodity not subject to the tax exemption. Furthermore, in a case in which the commodity identified by the corresponding commodity code is a tax-free commodity, no category is set, or a category (number) other than "1", "2" and "3" is set.

The purchaser data file 35 is an area in which various data relating to the nonresident who receives the issue of the tax exemption card C or the tax exemption sheet S at the reception counter 5 of the facility 2, that is, the purchaser who expresses his or her will to purchase the tax exemption commodity in the tax-free store 4 is stored.

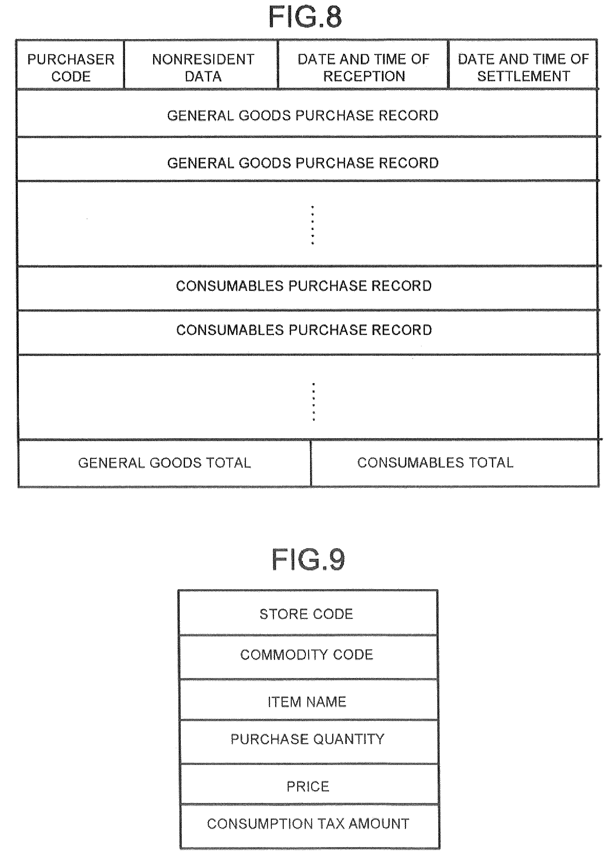

Fig. 8 is a schematic view illustrating main data items stored in the purchaser data file 35. As shown in Fig. 8, in the purchaser data file 35, various data including the purchaser code, nonresident data, date and time of reception, date and time of settlement, a general goods purchase record, a consumables purchase record, a general goods total and a consumables total is stored.

The purchaser code is a unique code for individually identifying the purchaser who receives the issue of the tax exemption card C or the tax exemption sheet S at the reception counter 5 of the facility 2. The nonresident data is information recorded on the certificate, presented by the purchaser identified by the corresponding purchaser code, which certifies that the purchaser is the nonresident. For example, in a case in which the certificate which certifies that the purchaser is the nonresident is a passport, category of the passport, name, passport number, nationality, date of birth, sex and expiration date of the passport are contained in the nonresident data. The date and time of reception is date and time on which the purchaser identified by the corresponding purchaser code receives the tax exemption card C or the tax exemption sheet S at the reception counter 5. The date and time of settlement is the date and time on which the purchaser identified by the corresponding purchaser code carries out a settlement processing at the procedure counter 6.

The general goods purchase record records a data relating to sales of the general goods within the tax exemption commodities purchased by the purchaser identified by the corresponding purchaser code in each tax-free store 4. The consumables purchase record records a data relating to sales of the consumables within the tax exemption commodities purchased by the same purchaser in each tax-free store 4. The general goods purchase record and the consumables purchase record have the common data structure and are respectively created for each tax exemption commodity. The general goods total respectively totals a purchase quantity and the tax-excluded price of the general goods within the tax exemption commodities purchased by the purchaser identified by the corresponding purchaser code in each tax-free store 4. The consumables total respectively totals a purchase quantity and the tax-excluded price of the consumables within the tax exemption commodities purchased by the same purchaser in each tax-free store 4.

Fig. 9 is a schematic view illustrating the data structure contained in the general goods purchase record and the consumables purchase record. As shown in Fig. 9, in the general goods purchase record and the consumables purchase record, store code, commodity code, item name, purchase quantity, price and consumption tax amount are contained. The store code, the commodity code, the item name and the purchase quantity are as stated above. The price is the tax-excluded price. The consumption tax amount is the amount of the consumption tax levied on the commodity identified by the corresponding commodity code.

The totalization table 36 is used to calculate the amount (collection amount) respectively paid by each tax-free store regarding the total amount of the taxable amount refunded to the nonresident in a certain period.

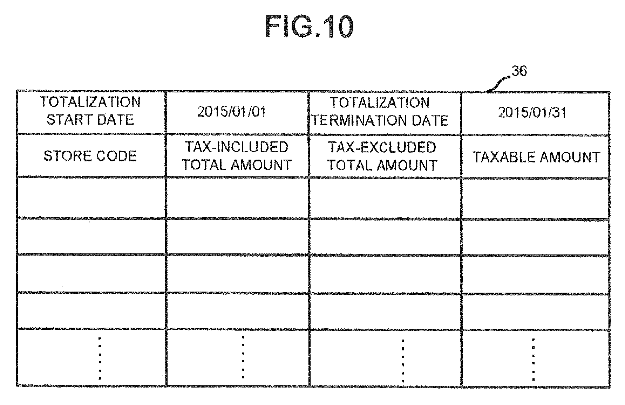

Fig. 10 is a schematic diagram illustrating the data structure of the totalization table 36. As shown in Fig. 10, the totalization table 36 contains a start date area and a termination date area. In the totalization table 36, a store code column, a tax-included total amount column, a tax-excluded total amount column and a taxable amount column are arranged in one direction (row direction). The start date and the termination date of the totalization period are stored in the start date area and the termination date area, respectively. For example, in a case of setting a unit of the totalization period to a month, the first day of the month is stored in the start date area, and the last day of the month is stored in the termination date area. In each column, the store code, the tax-included total amount, the tax-excluded total amount and the taxable amount are stored in order from the first row.

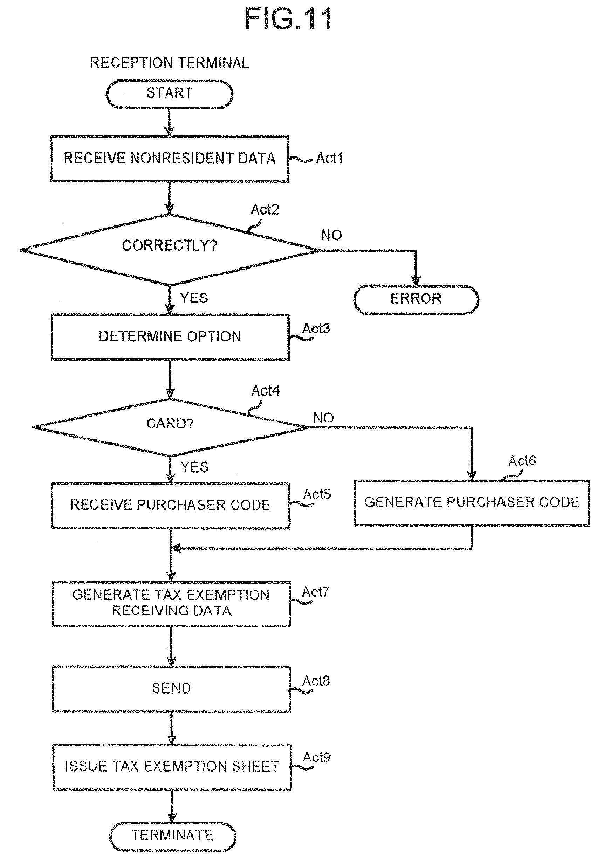

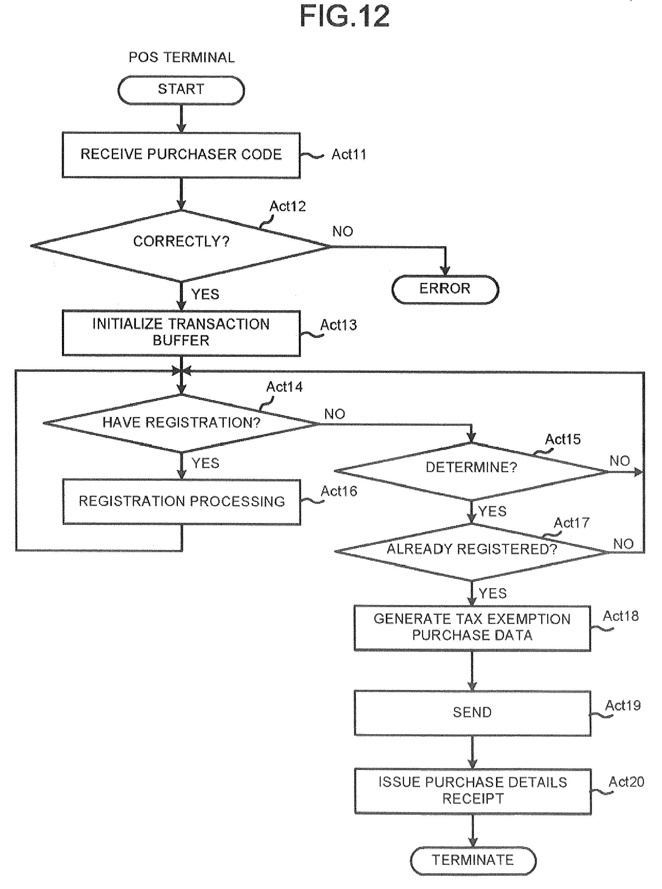

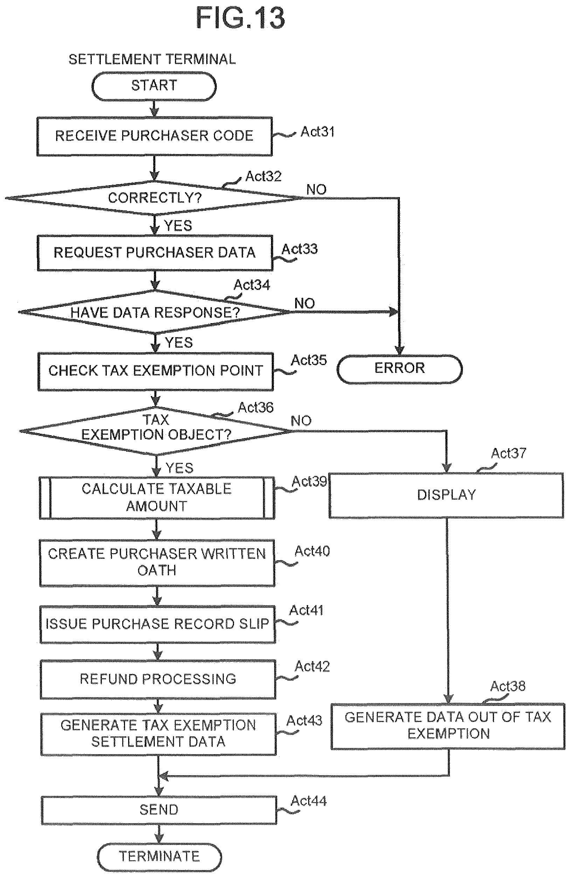

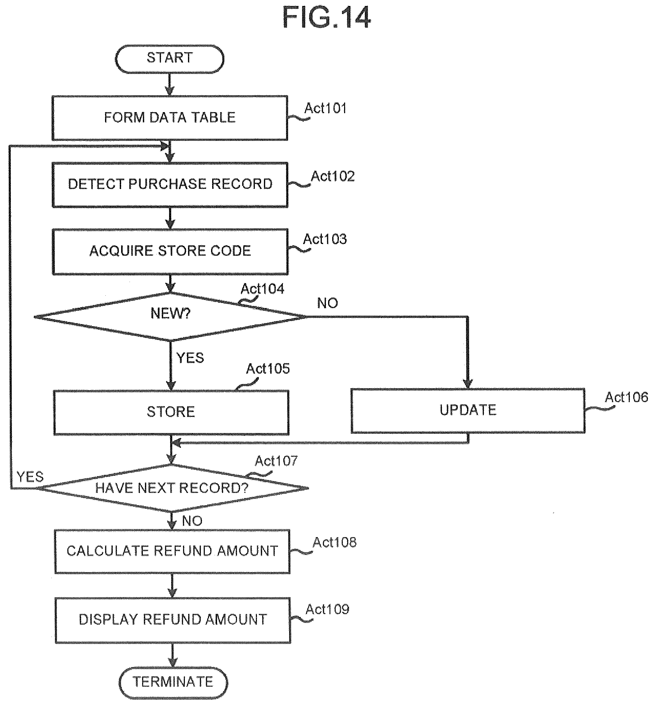

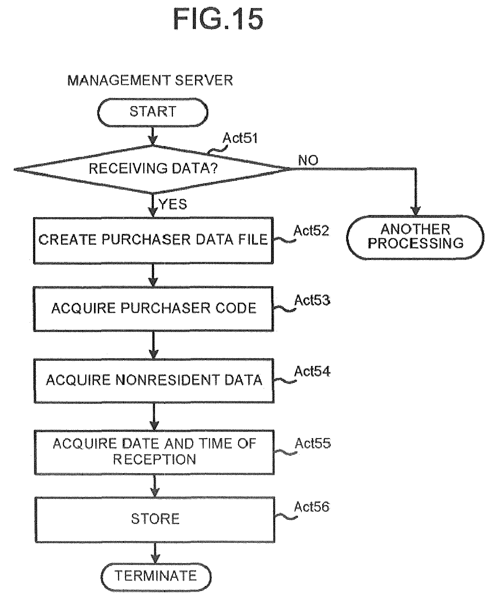

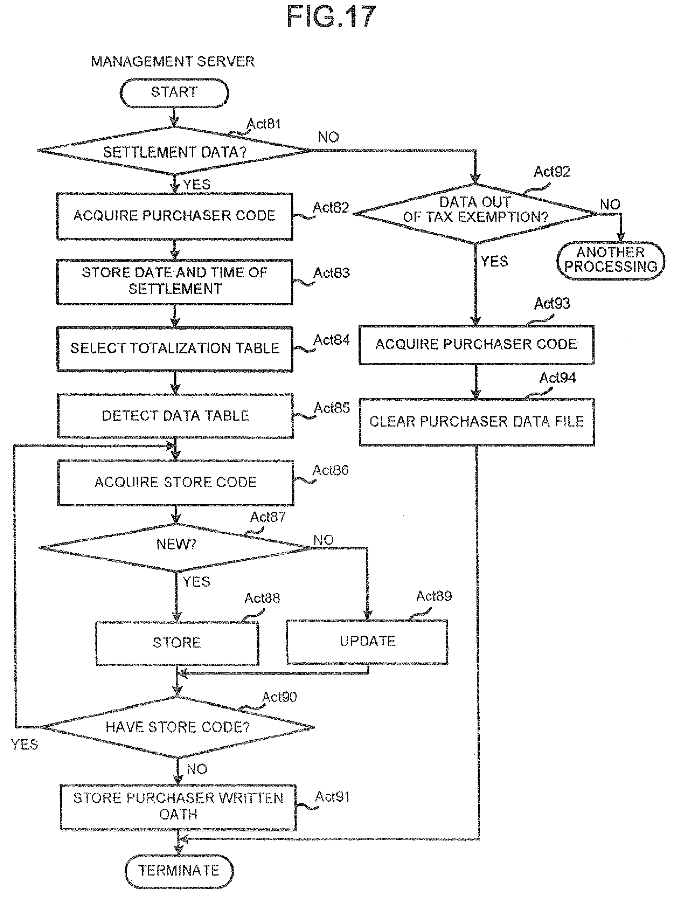

Fig. 11 is a flowchart illustrating main procedures of a control processing carried out by the CPU 501 of the reception terminal 50 according to a control program. Fig. 12 is a flowchart illustrating main procedures of a control processing carried out by the CPU 401 of the POS terminal 40 according to a control program. Fig. 13 and Fig. 14 are flowcharts illustrating main procedures of a control processing carried out by the CPU 601 of the settlement terminal 60 according to a control program. Fig. 15∼Fig. 17 are flowcharts illustrating main procedures of a control processing carried out by the CPU 311 of the management server 31 according to a control program. Hereinafter, operations of the tax exemption processing system 1 are described with the reference to Fig. 11 to Fig. 17. The content of the processing described below is an example, and various processing capable of achieving the same result can be properly used.

First, the admitted tax exemption procedure business provider of the facility 2 respectively deploys a person in charge of a job at the reception counter 5 and a person in charge of a job at the procedure counter 6. The person in charge may concurrently hold the job of the reception counter 5 and the job of the procedure counter 6.

The nonresident such as the foreign tourist who shops in each tax-free store 4 in the facility 2, using the tax exemption system for the commodity tax first goes to the reception counter 5. Then, the nonresident presents his or her passport to the person in charge of the job as the certificate for certifying that he or she is a nonresident. The person in charge of the job starts the reception terminal 50. For example, if the touch panel 507 is touched, the reception terminal 50 is started. If the reception terminal 50 is started, the CPU 501 starts the procedures of a processing, i.e., reception processing, shown in the flowchart of Fig. 11.

First, the CPU 501 receives the nonresident data (Act 1). Specifically, the CPU 501 displays a guidance "Please read information of the passport" on the touch panel 507. The person in charge of the job who confirms the guidance reads character information on a page on which the passport number and the like of the passport presented by the nonresident is recorded with the OCR 52. The character information of the passport read by the OCR 52 is supplied to the CPU 501 via the external device interface 510. The CPU 501 analyzes the character information to receive the passport information such as category of passport, name, passport number, nationality, date of birth, sex and expiration date of passport as the nonresident data.

Next, the CPU 501 determines whether or not the nonresident data is correctly received (Act 2). For example, if the character information read by the OCR 52 is analyzed but a part or whole of the passport information cannot be received, the CPU 501 determines that the nonresident data cannot be received. In a case in which the nonresident data cannot be received (NO in Act 2), the CPU 501 displays, for example, an error message "Information of the passport cannot be read" on the touch panel 507. Through the above, the reception processing is terminated.

In a case in which the nonresident data can be received (YES in Act 2), the CPU 501 determines an option set in the reception terminal 50 (Act 3). The admitted tax exemption procedure business provider issues the tax exemption card C or the tax exemption sheet S at the reception counter 5 to the nonresident who shops in the facility 2. Issuing which one of the tax exemption card C and the tax exemption sheet S is predetermined by the facility 2. In the facility 2 that issues the tax exemption card C, an option of issuing the tax exemption card is preset in the reception terminal 50. In the facility 2 that issues the tax exemption sheet S, an option of issuing the tax exemption sheet is preset in the reception terminal 50. Further, there is also a case in which an option of non-issue of the tax exemption card C and the tax exemption sheet S is preset in the reception terminal 50. In this case, neither the tax exemption card nor the tax exemption sheet is issued. The setting of the options is carried out, for example, in such a manner that a person in charge of maintenance of the tax exemption processing system 1 operates the touch panel 507 to set or reset an option flag stored in the RAM 503.

The CPU 501 checks a state of the option flag to identify whether the issue of the tax exemption card C is set, the issue of the tax exemption sheet S is set, or the non-issue of the tax exemption card C and the tax exemption sheet S is set (Act 4).

If the issue of the tax exemption card C is set (YES in Act 4), the CPU 501 receives the purchaser code (Act 5). Specifically, the CPU 501 displays a guidance "Please read data of the tax exemption card C" on the touch panel 507. The person in charge of the job who confirms the guidance takes out one tax exemption card C stocked at the reception counter 5 in advance. The unique code is recorded in the tax exemption card C in advance. The person in charge of the job reads the code recorded in the tax exemption card C taken out with the card reader 508. The code (card data) read by the card reader 508 is supplied to the CPU 501. The CPU 501 receives the unique code of each tax exemption card C as the purchaser code.

On the other hand, if the issue of the tax exemption sheet S or the non-issue of the tax exemption card C and the tax exemption sheet S is set (NO in Act 4), the CPU 501 generates the purchaser code (Act 6). Specifically, the CPU 501 generates the purchaser code according to the passport number in the passport information acquired in the processing in Act 1 and date and time information clocked by the clock section 505. For example, the CPU 501 sets the code in which the date and time information is added after the passport number as the purchaser code. Otherwise, the CPU 501 sets the code in which the date and time information is added before the passport number as the purchaser code.

If the processing in Act 5 or Act 6 is terminated, the CPU 501 generates the tax exemption receiving data (Act 7). The tax exemption receiving data contains the purchaser code, the nonresident data and the date and time of reception. In other words, the CPU 501 generates the tax exemption receiving data by associating the nonresident data received in the processing in Act 1 and the date and time information (date and time of reception) clocked by the clock section 505 with the purchaser code received in the processing in Act 5 or the purchaser code generated in the processing in Act 6.

The CPU 501 sends the tax exemption receiving data to the management server 31 (Act 8). Specifically, the CPU 501 notifies the communication interface 506 to send the tax exemption receiving data to the management server 31. After receiving the notification, the communication interface 506 sends the tax exemption receiving data to the management server 31 via the network 7.

The CPU 501 issues the tax exemption sheet S (Act 9). The contents of the issued tax exemption sheet S are different from each other according to the state of the option flag determined in Act 3. Specifically, in a case in which the option of the issue of the tax exemption sheet S is set, the CPU 501 generates a print data of the tax exemption sheet S containing the barcode representing the purchaser code generated in Act 6. In the print data, in addition to the foregoing barcode, the date and time information clocked by the clock section 505, logo information of the facility 2 and text data illustrating a use method of the tax exemption sheet S are contained. Furthermore, if the option of the issue of the tax exemption card C is set, the CPU 501 generates a print data other than the foregoing barcode. The CPU 501 notifies the printer interface 509 to output the print data of the tax exemption sheet S to the printer 51. After receiving the notification, the printer interface 509 outputs the print data of the tax exemption sheet S to the printer 51. Through the foregoing processing, the printer 51 is driven to issue the tax exemption sheet S. Furthermore, if the option of the non-issue of the tax exemption card C and the tax exemption sheet S is set in the reception terminal 50, the foregoing tax exemption sheet S is not issued.

The CPU 311 of the management server 31 that receives the tax exemption receiving data starts an information processing including procedures shown in the flowchart in Fig. 15.

First, the CPU 311 confirms whether or not the receiving data is the tax exemption receiving data (Act 51). If the receiving data is the tax exemption receiving data (YES in Act 51), the CPU 311 creates a new purchaser data file 35 on the auxiliary storage device 314 (Act 52).

Next, the CPU 311 acquires the purchaser code from the tax exemption receiving data (Act 53). The CPU 311 acquires the nonresident data from the tax exemption receiving data (Act 54). Furthermore, the CPU 311 acquires the date and time of reception from the tax exemption receiving data (Act 55). The order of the procedures of Acts 53, 54 and 55 may not be limited to this order. The order of the procedures may be in any order as long as the purchaser code, the nonresident data and the date and time of reception can be acquired from the tax exemption receiving data.

If the processing in Acts 53, 54 and 55 is terminated, the CPU 311 stores the purchaser code, the nonresident data and the date and time of reception acquired from the tax exemption receiving data in the purchaser data file 35 created through the processing in Act 52 (Act 56). Through the above, the CPU 311 terminates the reception processing of the tax exemption receiving data.

If terminating the sending of the tax exemption receiving data, the CPU 501 of the reception terminal 50 displays, for example, a message indicating the completion of the sending on the touch panel 507. Through the above, the CPU 501 terminates the reception processing of the tax exemption receiving data for the nonresident.

The person in charge of the job of the reception counter 5 who confirms the message indicating the completion of the sending of the tax exemption receiving data hands over the tax exemption card C or the tax exemption sheet S to the nonresident. Which one of the tax exemption card C and the tax exemption sheet S is handed over is determined by each facility 2 as stated above. The nonresident can present the tax exemption card C or the tax exemption sheet S to utilize the tax exemption system to purchase a commodity at each tax-free store 4 in the facility 2.

In a case of receiving the presentation of the tax exemption card C or the tax exemption sheet S from the purchaser of the commodity, the store clerk of the tax-free store 4 operates the POS terminal 40 to declare a sales registration of the commodity purchased by the nonresident. For example, a declaration key for declaring the sales registration of the commodity purchased by the nonresident is arranged on the keyboard 408 of the POS terminal 40, and the store clerk operates the declaration key. After operating the declaration key, the store clerk reads the data recorded on the tax exemption card C, using the card reader 412. Otherwise, the store clerk reads the barcode printed on the tax exemption sheet S, using the scanner 411.

If the foregoing declaration key is input, the CPU 401 of the POS terminal 40 starts an information processing including procedures shown in the flowchart in Fig. 12.

First, the CPU 401 receives the purchaser code (Act 11). Specifically, if the data recorded in the tax exemption card C is read by the card reader 412, the CPU 401 receives the data as the purchaser code. Otherwise, if the barcode printed on the tax exemption sheet S is read by the scanner 411, the CPU 401 receives a code obtained by analyzing the barcode as the purchaser code.

Next, the CPU 401 determines whether or not the purchaser code can be correctly received (Act 12). For example, in a case in which the card data read by the card reader 412 is analyzed but the code recorded in the tax exemption card C is not coincident with the code system, the CPU 401 determines that the purchaser code cannot be received. Similarly, in a case in which the system of the code obtained from the barcode read by the scanner 411 is different from the purchaser code generated according to the passport number and the date and time information, the CPU 401 determines that the purchaser code cannot be received. If the purchaser code cannot be received (NO in Act 12), the CPU 401 displays, for example, an error message "Purchaser code cannot be read" on the display 409. Through the above, the information processing in Fig. 12 is terminated.

If the purchaser code can be received (YES in Act 12), the CPU 401 initializes a transaction buffer (Act 13). The transaction buffer is an area for storing the data of the commodity traded as one commodity transaction, and is formed on, for example, the RAM 403.

After initializing the transaction buffer, the CPU 401 confirms the presence or absence of the commodity registration (Act 14). Specifically, the CPU 401 confirms whether or not the barcode attached to the commodity is read through the scanner 411, whether or not the commodity code is input through the key input of the keyboard 408, or whether or not a commodity key is touched through the touch panel 414. If the barcode is read, the commodity code is input or the commodity key is touched, the CPU 401 recognizes the presence of the commodity registration.

If the presence of the commodity registration cannot be recognized (NO in Act 14), the CPU 401 confirms presence or absence of a registration determination operation (Act 15). Specifically, the CPU 401 confirms whether or not a determination key on the touch panel 414 is touched. If it is determined that the determination key is touched, the CPU 401 recognizes the presence of the registration determination operation.

If the presence of the registration determination operation cannot be recognized (NO in Act 15), the CPU 401 proceeds to the processing in Act 14 again to confirm the presence or absence of the commodity registration. Thus, the CPU 401 waits for the execution of the commodity registration or the execution of the registration determination operation through the processing in Act 14 and Act 15. Further, in the standby state, in a case in which the input of another key (the numeric keys, the multiplication key and the subtotal key) is detected, the CPU 401 returns to the standby states in Act 14 and Act 15 again after the processing corresponding to the input key is executed.

The store clerk registers the data of the commodity purchased by the purchaser in the POS terminal 40. For example, in a case in which the barcode is attached to the commodity, the store clerk reads the barcode with the scanner 411. In a case in which the barcode is not attached to the commodity, the store clerk inputs the commodity code from the keyboard 408 or touches the commodity key displayed on the screen of the touch panel 414. In this way, if the registration of the data of all the commodities purchased by the purchaser is completed, the store clerk touches the determination key.

In the standby states in Act 14 and Act 15, if the presence of the commodity registration is recognized (YES in Act 14), the CPU 401 carries out a registration processing of the commodity data (Act 16). The registration processing is carried out by the existing POS terminal, and thus the detailed description thereof is omitted. In the POS terminal 40, through the registration processing, purchased commodity data containing the commodity code, the commodity name, the price, the consumption tax amount, the sales quantity and the sales amount is stored in the transaction buffer as information relating to the sales of the commodity purchased by the purchaser.

If the registration processing is terminated, the CPU 401 proceeds to the processing in Act 14 again to confirm the presence or absence of the commodity registration. Thus, each time the presence of the commodity registration is recognized, the CPU 401 repeatedly carries out the registration processing in Act 16. In this way, the information relating to the sales of the commodity purchased by the purchaser is collectively stored in the transaction buffer.

In the standby states in Act 14 and Act 15, if the presence of the registration determination operation is recognized (YES in Act 15), the CPU 401 determines whether or not the commodity or commodity data is already registered (Act 17). if the purchased commodity data is not stored in the transaction buffer, the commodity is not yet registered. In this case (NO in Act 17), the CPU 401 proceeds to the processing in Act 14 again to recognize the presence or absence of the commodity registration.

In a case in which the purchased commodity data is stored in the transaction buffer and thus the registration of the commodity is recognized (YES in Act 17), the CPU 401 generates the tax exemption commodity purchase data (Act 18). Specifically, the CPU 401 generates the tax exemption commodity purchase data by associating the purchaser code received in the processing in Act 11 and the store code set in the auxiliary storage device 404 in advance with the purchased commodity data stored in the transaction buffer.

The CPU 401 sends the tax exemption commodity purchase data to the management server 31 (Act 19). Specifically, the CPU 401 notifies or instructs the communication interface 406 to send the tax exemption commodity purchase data to the management server 31. After receiving the notification, the communication interface 406 sends the tax exemption commodity purchase data to the management server 31 via the network 7.

If the sending processing is terminated, the CPU 401 controls the issue of the purchase details receipt (Act 20). Specifically, the CPU 401 generates a print data of the purchase details receipt on the basis of the purchased commodity data stored in the transaction buffer. Then, the CPU 401 outputs the print data to the receipt printer 410 to print the purchase details receipt. The printed purchase details receipt is issued from an issuing port, and thus the store clerk hands over the purchase details receipt to the purchaser.

Through the above, the CPU 401 terminates the registration processing of the commodity purchased by the nonresident.

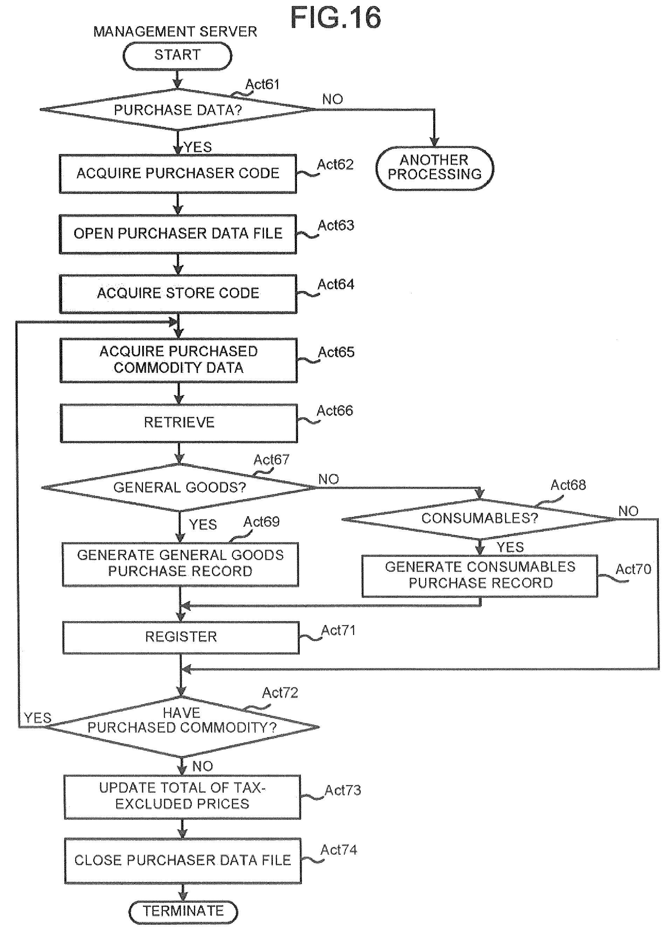

The CPU 311 of the management server 31 receiving the tax exemption commodity purchase data starts an information processing including procedures shown in the flowchart in Fig. 16.

First, the CPU 311 confirms whether or not the receiving data is the tax exemption commodity purchase data (Act 61). If the receiving data is the tax exemption commodity purchase data (YES in Act 61), the CPU 311 acquires the purchaser code from the tax exemption commodity purchase data (Act 62). Then, the CPU 311 reads out the purchaser data file 35 containing the acquired purchaser code from the auxiliary storage device 314 and copies the purchaser data file 35 on the RAM 313 to open the purchaser data file 35 (Act 63).

Next, the CPU 311 acquires the store code from the tax exemption commodity purchase data (Act 64). The CPU 311 also acquires the purchased commodity data from the tax exemption commodity purchase data (Act 65). In a case in which a plurality of the purchased commodity data is contained in the tax exemption commodity purchase data, the CPU 311 selectively acquires one of the purchased commodity data.

The CPU 311 retrieves the tax exemption commodity database 34 by taking the store code acquired in the processing in Act 64 and the commodity code contained in the purchased commodity data acquired in the processing in Act 65 as keys for retrieval (Act 66). Then, the CPU 311 determines the tax exemption classification of a record in which the store code and the commodity code are coincident with the keys for retrieval. In other words, the CPU 311 confirms whether or not the tax exemption classification indicates the general goods (Act 67). If the tax exemption classification does not indicate the general goods (NO in Act 67), the CPU 311 confirms whether or not the tax exemption classification indicates the consumables (Act 68). If the tax exemption classification does not indicate the consumables (NO in Act 68), the CPU 311 proceeds to the processing in Act 72. Such a procedure is carried out in a case in which the commodity identified by the corresponding commodity code is a commodity not subject to the tax exemption or a tax-free or non-taxable commodity.

On the other hand, if the tax exemption classification indicates the general goods (YES in Act 67), the CPU 311 generates the general goods purchase record (Act 69). In other words, the CPU 311 generates the general goods purchase record according to the store code acquired in the processing in Act 64 and the commodity code, the item name, the purchase quantity, the price and the consumption tax amount in the purchased commodity data acquired in the processing in Act 65. Further, if the tax exemption classification indicates the consumables (YES in Act 68), the CPU 311 generates the consumables purchase record (Act 70). In other words, the CPU 311 generates the consumables purchase record according to the store code acquired in the processing in Act 64 and the commodity code, the item name, the purchase quantity, the price and the consumption tax amount in the purchased commodity data acquired in the processing in Act 65. In this way, if the general goods purchase record or the consumables purchase record is generated, the CPU 311 registers the generated record in the purchaser data file 35 on the RAM 43 (Act 71). Then, the CPU 311 proceeds to the processing in Act 72.

In Act 72, the CPU 311 determines whether or not the purchased commodity data which is not acquired yet in the processing in Act 65 exists in the tax exemption commodity purchase data. If such purchased commodity data exists (YES in Act 72), the CPU 311 returns to the processing in Act 65. Then, the CPU 311 repeats the processing subsequent to Act 65 in the same way as stated above.

In this way, as to all the purchased commodity data contained in the tax exemption purchase data, after the processing subsequent to Act 65 is executed (NO in Act 72), the CPU 311 updates each data of the total of the general goods and the total of the consumables in the purchaser data file 35 (Act 73). Specifically, the CPU 311 respectively totals the purchase quantity, the price, the consumption tax amount of each general goods purchase record registered in the purchaser data file 35 and overwrites the general goods total data in the purchaser data file 35 with them. Similarly, the CPU 311 respectively totals the purchase quantity, the price, the consumption tax amount of each consumables purchase record registered in the purchaser data file 35 and overwrites the consumables total data in the purchaser data file 35 with them.

Afterwards, the CPU 311 stores the purchaser data file 35 on the RAM 43 in the auxiliary storage device 314 in an overwritten manner to close the purchaser data file 35 (Act 74). Through the above, the CPU 311 terminates the reception processing of the tax exemption commodity purchase data.

The nonresident who finishes the shopping at each tax-free store 4 goes to the procedure counter 6. Then, the nonresident presents the tax exemption card C or the tax exemption sheet S to the person in charge of the job.

In a case of receiving the presentation of the tax exemption card C or the tax exemption sheet S from the nonresident, the person in charge of the job starts the settlement terminal 60. For example, if the touch panel 507 is touched, the settlement terminal 60 is started. If the settlement terminal 60 is started, the CPU 601 starts a processing including procedures shown in the flowchart in Fig. 13, i.e., settlement processing.

First, the CPU 601 receives the purchaser data (Act 31). Specifically, the CPU 601 displays a guidance such as "Please read the data of the tax exemption card" or "Please scan the barcode of the tax exemption sheet" on the touch panel 607. The person in charge of the job who confirms the guidance reads the data recorded on the tax exemption card C presented by the nonresident with the card reader 609. Otherwise, the person in charge of the job reads the barcode printed on the tax exemption sheet S presented by the nonresident with the scanner 608. If the data recorded on the tax exemption card C is read by the card reader 609, the CPU 601 receives the data as the purchaser code. If the barcode printed on the tax exemption sheet S is read by the scanner 608, the CPU 601 receives a code obtained by analyzing the barcode as the purchaser code. The computer including the CPU 601 as the main part thereof functions as a first reception module for receiving the purchaser code of the purchaser who receives the refund on the purchased commodity through the processing in Act 31.

Next, the CPU 601 determines whether or not the purchaser code can be correctly received (Act 32). For example, in a case in which the card data read by the card reader 609 is analyzed but the code recorded on the tax exemption card C is not coincident with the code system, the CPU 601 determines that the purchaser code cannot be received. Similarly, in a case in which the system of the code obtained from the barcode read by the scanner 608 is different from the system of the purchaser code generated according to the passport number and the date and time information, the CPU 601 determines that the purchaser code cannot be received. If the purchaser code cannot be received (NO in Act 32), the CPU 601 displays an error message, for example, "Purchaser code cannot be read" on the touch panel 607. Through the above, the CPU 601 terminates the settlement processing.

If the purchaser code can be received (YES in Act 32), the CPU 601 requests the purchaser data file 35 to the management server 31 (Act 33). Specifically, the CPU 601 generates an inquiry command of the purchaser data file 35 containing the purchaser code received in the processing in Act 31 and notifies the communication interface 606 to send the inquiry command to the management server 31. After receiving the notification, the communication interface 606 sends the inquiry command to the management server 31 via the network 7.

The CPU 311 of the management server 31 that receives the inquiry command retrieves the purchaser data file 35 in which the purchaser code in the command is set. If the purchaser data file 35 is detected, the CPU 311 sends the purchaser data file 35 to the settlement terminal 60 serving as a sending source (sender) of the inquiry command via the network 7.

The CPU 601 that sends the inquiry command confirms the presence or absence of a response of the purchaser data file 35 (Act 34). If there is no response of the purchaser data file 35 (NO in Act 34), the CPU 601 displays an error message, for example, "Purchaser data file cannot be acquired" on the touch panel 607. Through the above, the CPU 601 terminates the settlement processing in Fig. 13.

If there is the response of the purchaser data file 35 (YES in Act 34), the CPU 601 stores the purchaser data file in the working area of the RAM 313. Then, the CPU 601 executes the following processing for the purchaser data file. In other words, the CPU 601 checks the tax exemption point (Act 35). Specifically, the CPU 601 confirms whether or not the amount (total of the tax-excluded prices) of the general goods total data stored in the purchaser data file 35 is equal to or greater than the lower limit amount "10,001" authorized as the tax exemption point. Further, the CPU 601 confirms whether or not the amount (total of the tax-excluded prices) of the consumables total data stored in the purchaser data file 35 is in a range of the amount from the lower limit amount "5,001" to the upper limit amount "500,000" authorized as the tax exemption points.

In this way, the tax exemption point is checked, and then the CPU 601 determines whether or not it is the tax exemption item (Act 36). Specifically, if the amount of the general goods total data is equal to or greater than the lower limit amount authorized as the tax exemption point of the general goods or if the amount of the consumables total data is in the range of the amount from the lower limit amount to the upper limit amount authorized as the tax exemption points of the consumables in the processing in Act 35, the CPU 601 authorizes it as the tax exemption item. If the amount of the general goods total data is smaller than the lower limit amount authorized as the tax exemption point of the general goods or if the amount of the consumables total data is less than the lower limit amount or greater than the upper limit amount authorized as the tax exemption points of the consumables, the CPU 601 does not authorize it as the tax exemption item.

If it is authorized that it is not a tax exemption item (NO in Act 36), the CPU 601 displays a message, for example, "It is not a tax exemption item" (Act 37) on the touch panel 607. The CPU 601 generates a data out of the tax exemption (Act 38). The purchaser code received in the processing in Act 31 is contained in the data out of the tax exemption. Afterwards, the CPU 601 proceeds to the processing in Act 46.

On the other hand, if it is determined that it is a tax exemption item (YES in Act 36), the CPU 601 calculates the amount of the tax exemption, that is, the taxable amount (Act 39). Specifically, the taxable amount calculation processing is described in detail with reference to Fig. 14.

The CPU 601 forms the data table 64 on the RAM 603 (Act 101). Then, the CPU 601 detects a leading purchase record from the purchaser data file 35 received from the management server 31 (Act 102). The purchase record may be a general goods purchase record or a consumables purchase record.

The CPU 601 acquires the store code from the purchase record (Act 103). The CPU 601 determines whether the store code is a new store code that is not registered in the data table 64 or the existing store code that is already registered (Act 104). In this case, if the store code is a new store code (YES in Act 104), the CPU 601 sets the store code of the purchase record in the store code column of the data table 64 (Act 105). The CPU 601 calculates the tax-included price by adding up the price in the purchase record and the consumption tax amount. The CPU 601 sets the tax-included price, the price and the consumption tax amount in the tax-included total amount column, the tax-excluded total amount column and the taxable amount column, respectively. At this time, the store code is set in the same row as the tax-included price, the price and the consumption tax amount.

Next, the CPU 601 confirms whether or not there is a next purchase record in the purchaser data file 35 (Act 107). If there is a purchase record (YES in Act 107), the CPU 601 returns to the processing in ACT 102 to detect the purchase record. The CPU 601 acquires a store code from the purchase record (Act 103) to determine whether the store code is a new code or the existing code (Act 104).

At this time point, there is a case in which the store code is a new store code or a case in which the store code is the existing store code. If the store code is a new store code (YES in Act 104), the CPU 601 executes the processing in Act 107 mentioned above.

If the store code is the existing store code (NO in Act 104), the CPU 601 calculates the tax-included price by adding up the price of the purchase record and the consumption tax amount (Act 106). The CPU 601 adds the tax-included price, the price and the consumption tax amount to the data of the tax-included total amount column, the data of the tax-excluded total amount column and the data of the taxable amount column, respectively.

The CPU 601 confirms whether there is a next purchase record in the purchaser data file 35 (Act 107). If there is a next purchase record (YES in Act 107), the CPU 601 returns to the processing in ACT 102 and repeats the following processing in the same way as stated above.

If the execution of the processing from Act 102 to Act 106 is terminated for all the purchase records in the purchaser data file 35 (NO in Act 107), the CPU 601 totals the amount data stored in the taxable amount column in the data table 64 (Act 108). The CPU 601 displays the total amount of the taxable amount on the touch panel 607 as the refund amount. For example, the CPU 601 displays a message "Taxable amount xxx Yen is refunded" on the touch panel 607. Through the above, the taxable amount calculation processing is terminated.

In this way, if the nonresident is subject to the tax exemption, the refund amount (total of the taxable amount) is displayed on the touch panel 607. In the meantime, if the nonresident is not subject to the tax exemption, a message indicating "He/She is not subject to the tax exemption" is displayed as stated above. Thus, the person in charge of the job can easily recognize whether or not the nonresident is subject to the tax exemption from the content displayed on the touch panel 607.

Return to the processing in Fig. 13. If the taxable amount calculation processing is terminated, the CPU 601 creates a purchaser written oath based on the data of the purchaser data file 35 (Act 40). The purchaser written oath is created for each tax-free store 4.

In the purchaser written oath, as common items, name, nationality, date of birth, passport number and the like of the purchaser (nonresident) are necessary. The CPU 601 obtains this information from the nonresident data in the purchaser data file 35. Further, in the written oath, as a common item, date of the purchase is necessary. The CPU 601 obtains the date of the purchase from the data of the date and time of reception in the purchaser data file 35. Otherwise, the CPU 601 may obtain the date of the purchase from the data of the date and time clocked by the clock section 605. Further, in the written oath, as a common item, full name or store name of the business person who runs the tax-free store 4 is necessary. A data table for setting the full name or store name of the business person of each tax-free store 4 in association with the store code of the tax-free store 4 is stored in the auxiliary storage device 604 of the settlement terminal 60. The CPU 601 obtains the full name or store name of the business person from the data table by taking each store code contained in the general goods purchase record and the consumables purchase record as a key.

On the other hand, in the purchaser written oath, the item names, the quantities and the tax-excluded prices and the total of the tax-excluded prices of all the purchased commodities categorized as the general goods are necessary. The CPU 601 obtains this information from the general goods total data and the general goods purchase record in the purchaser data file 35. Similarly, in the purchaser written oath, the item names, the quantities and the tax-excluded prices and the total of the tax-excluded prices of all the purchased commodities categorized as the consumables are necessary. The CPU 601 obtains this information from the consumables total data and the consumables purchase record in the purchaser data file 35.

Further, in the purchaser written oath, as a common item, signature of the purchaser is necessary. Thus, the person in charge of the job who confirms the purchaser written oath requests the signature to the nonresident on the pen tablet 62. The CPU 601 receives the input of the electronic sign. Specifically, the CPU 601 acquires the locus data from the pen tablet 62 through the external device interface 611. The CPU 601 stores the locus data as the electronic sign data by the purchaser (nonresident) in the working area.

In the auxiliary storage device 604 of the settlement terminal 60, a layout data of the purchaser written oath in which the content of the oath for the tax-free store is recorded in native language is stored. The CPU 601 obtains the layout data of the purchaser written oath the number of which is equal to that of the store codes contained in the general goods purchase record and the consumables purchase record in the purchaser data file 35. Then, the CPU 601 respectively arranges the data of the record items acquired from the purchaser data file 35 in the layout data to complete the electronic data of the purchaser written oath for each tax-free store 4.

Next, the CPU 601 issues the purchase record slip on the basis of the data in the purchaser data file 35 (Act 41). The purchase record slip records information of a seller (full name or store name), information of the purchaser(full name, date of birth, passport number and the like), the date of purchase, information (item name, tax-excluded selling prices, sales quantity, total amount of tax-excluded prices and the like) relating to purchased commodities and important points(matters that demand special attention). Thus, in the auxiliary storage device 604 of the settlement terminal 60, a layout data of the purchase record slip in which the important points are recorded in native language is stored. The CPU 601 arranges the data of the record items acquired from the purchaser data file 35 in the layout data to complete print data of the purchase record slip. Then, the CPU 601 notifies the printer interface 610 to output the print data of the purchase record slip to the printer 61. After receiving the notification, the printer interface 610 outputs the print data of the purchase record slip to the printer 61. Through the processing described above, the printer 61 is driven to print the purchase record slip, and the purchase record slip is issued.

Next, the CPU 601 carries out a refund processing (Act 42). Specifically, the CPU 601 notifies the external device interface 612 to output the dispensing data of the tax exemption amount (refund amount) calculated in the processing in Act 39 to the money dispensing machine 63. After receiving the notification, the external device interface 612 outputs the dispensing data to the money dispensing machine 63. Through the foregoing processing, the money dispensing machine 63 is driven, and cash equivalent to the tax exemption amount is dispensed.

Next, the CPU 601 generates the tax exemption settlement data (Act 43). Specifically, the CPU 601 generates the tax exemption settlement data by associating the date and time data (date and time of settlement) clocked by the clock section 605, the data in the data table 64 created in the processing in Act 39 and the electronic data of the purchaser written oath created in the processing in Act 40 with the purchaser code acquired in the processing in Act 31. In this way, the CPU 601 generates the tax exemption settlement data, and then proceeds to the processing in Act 44.

In Act 44, the CPU 601 sends the tax exemption settlement data generated in the processing in Act 43 or the data out of the tax exemption generated in the processing in Act 38 to the management server 31. Specifically, the CPU 601 notifies the communication interface 606 to send the tax exemption settlement data or the data out of the tax exemption to the management server 31. After receiving the notification, the communication interface 606 sends the tax exemption settlement data or the data out of the tax exemption to the management server 31 via the network 7. The computer including the CPU 601 as the main part thereof functions as an output module for outputting the taxable amount calculated for each tax-free store through the cooperation of the communication interface 606.

The CPU 311 of the management server 31 that receives the tax exemption settlement data or the data out of the tax exemption starts an information processing including procedures shown in the flowchart in Fig. 17.

First, the CPU 311 confirms whether or not the receiving data is the tax exemption settlement data (Act 81). If the receiving data is the tax exemption settlement data (YES in Act 81), the CPU 311 acquires the purchaser code from the tax exemption settlement data (Act 82). Then, the CPU 311 stores the data of the date and time of settlement contained in the tax exemption settlement data in the purchaser data file 35 containing the acquired purchaser code (Act 83).

Next, the CPU 311 selects the totalization table 36 (Act 84). In the present embodiment, a plurality of the totalization tables 36 which takes the unit of the totalization period as a month is stored in the auxiliary storage device 314. The CPU 311 selects the totalization table 36 of the month to which the settlement date and time contained in the tax exemption settlement data belongs.

If the totalization table 36 is selected, the CPU 311 detects data in the data table 64 from the tax exemption settlement data (Act 85). The CPU 311 acquires the store code in order from the first row of the data table 64 (Act 86). The CPU 311 determines whether the store code is a new store code that is not registered in the totalization table 36 or the existing store code that is already registered (Act 87). If the acquired store code is a new store code (YES in Act 87), the CPU 311 stores the store code and each data of the tax-included total amount, the tax-excluded total amount and the taxable amount stored in the same row as the store code in the totalization table 36 in order from the first row thereof (Act 88).

Contrarily, if the acquired store code is the existing store code (NO in Act 87), the CPU 311 updates each data of the tax-included total amount, the tax-excluded total amount and the taxable amount stored in the same row as the existing store code in the totalization table 36 to a value by respectively adding each data of the tax-included total amount, the tax-excluded total amount and the taxable amount stored in the same row as the existing store code in the data table 64 (Act 89).

The CPU 311 confirms whether or not there is a next store code in the data table 64 (Act 90). If there is a next store code, the CPU 311 returns to the processing in Act 86 to execute the same processing as stated above. In other words, the CPU 311 acquires the next store code (Act 86) to determine whether the acquired store code is a new store code or the existing store code (Act 87). If the acquired store code is a new store code (YES in Act 87), the CPU 311 stores the store code and each data of the tax-included total amount, the tax-excluded total amount and the taxable amount stored in the same row as the store code in the totalization table 36 (Act 88). Contrarily, if the acquired store code is the existing store code (NO in Act 87), the CPU 311 updates each data of the tax-included total amount, the tax-excluded total amount and the taxable amount stored in the same row as the existing store code in the totalization table 36 to a value by respectively adding each data of the tax-included total amount, the tax-excluded total amount and the taxable amount stored in the same row as the existing store code in the data table 64 (Act 89).

The computer including the CPU 311 as the main part thereof functions as a totalization module for totaling the taxable amount in a prescribed period for each tax-free store according to the data in the data table 64 sent from the settlement terminal 60.

In this way, if the execution of the processing from Act 86 to Act 89 is terminated for all the store codes stored in the data table 64 (NO in Act 90), the CPU 311 acquires the electronic data of the purchaser written oath from the tax exemption settlement data and stores it in the auxiliary storage device 314 (Act 91). Through the above, the CPU 311 terminates the reception processing of the tax exemption settlement data.

On the other hand, if the receiving data is not the tax exemption settlement data (NO in Act 81), the CPU 311 confirms whether or not the receiving data is the data out of the tax exemption (Act 92). If the receiving data is the data out of the tax exemption (YES in Act 92), the CPU 311 acquires the purchaser code from the data out of the tax exemption (Act 93). Then, the CPU 311 clears the purchaser data file 35 containing the acquired purchaser code from the auxiliary storage device 314 (Act 94). Through the above, the CPU 311 terminates the reception processing of the data out of the tax exemption.

In this way, in the facility 2 where the tax exemption processing system 1 of the present embodiment is constructed, the nonresident such as a foreign tourist who presents the certificate such as a passport for certifying that he or she is subject to the tax exemption at the reception counter 5 receives the issue of the tax exemption card C or the tax exemption sheet S from the person in charge of the job at the reception counter 5. Afterwards, the nonresident presents the tax exemption card C or the tax exemption sheet S to the store clerk to do the shopping at the tax-free store 4. Then, if the shopping in the facility 2 is ended, the nonresident goes to the procedure counter 6 to present the tax exemption card C or the tax exemption sheet S to the person in charge of the job. The person in charge of the job at the procedure counter 6 carries out an operation of reading the data of the tax exemption card C or the barcode of the tax exemption sheet S through the settlement terminal 60.

Thus, in the settlement terminal 60, the information relating to the sales of the commodity purchased by the nonresident at each tax-free store 4 in the facility 2 is collected from the management server 31. Then, it is automatically checked on the basis of the information whether or not the purchased commodity is subject to the tax exemption. If the commodity is subject to the tax exemption, the total of the amount of tax levied on the commodity serving as a taxable object, i.e., the tax exemption amount, is displayed on the touch panel 607 as the refund amount. Then, at the procedure counter 6, cash equivalent to the refund amount is dispensed from the money dispensing machine 63.

Thus, conventionally, the person in charge of the job at the procedure counter 6 divides the commodities subject to the tax exemption purchased by the purchaser into the consumables and the general goods other than the consumables on the basis of the information of the receipt received by the purchaser (nonresident) from each tax-free store 4 and respectively totals the tax-excluded prices for the consumables and the general goods to determine whether or not the commodities are subject to the tax exemption. However, these procedures can be wholly simplified. If the commodities are subject to the tax exemption, the calculation with which the tax exemption amount is derived is also unnecessary. As a result, as the procedures of the tax exemption measure carried out at the procedure counter 6 are simplified, excellent effects such as the reduction to the burden of the person in charge of the job and the time savings on the procedures are achieved.

It is not required for the nonresident to present the passport at each tax-free store 4. Because of this, each tax-free store 4 is not required to prepare the OCR 52 for reading the information of the passport, and the existing POS terminal 40 provided with the scanner 411 and the card reader 412 can be applied as hardware without performing any modification. Thus, the tax-free store 4 can be easily converted to the procedure consignment type tax-free store without increasing equipment cost.

Furthermore, as described above, the nonresident may not present the passport at each tax-free store 4, and therefore a risk of missing the passport, e.g., thief, lost and the like, can be reduced. In addition, the nonresident may not present the receipt at the procedure counter 6. Thus, the nonresident is also not required to keep the receipts issued at each tax-free store 4 in a wallet and the like without missing the receipts. Therefore, a system with a high efficiency and a good user friendliness for the nonresident is realized.

In the settlement terminal 60, the total of the tax amount levied on the commodity subject to the applicable tax is calculated by each store code of the tax-free store at which the commodity is sold. Specifically, the data table 64 is formed on the RAM 63 of the settlement terminal 60 at the time of executing a processing for the nonresident. In the data table 64, the tax-included price, the tax-excluded price and the consumption tax amount of the commodity subject to the tax exemption purchased by the nonresident are calculated by each store code of the tax-free store at which the commodity is sold, respectively. The total of the consumption tax amount calculated by each store code is calculated as the taxable amount of each tax-free store. The taxable amount of each tax-free store is stored in the data table 64. Thus, the admitted tax exemption procedure business provider can easily obtain information that how much the taxable amount refunded to the nonresident at the procedure counter 6 is collected from each tax-free store, referring to the data in the data table 64.

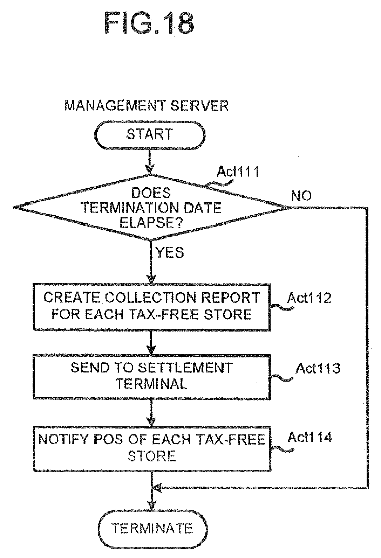

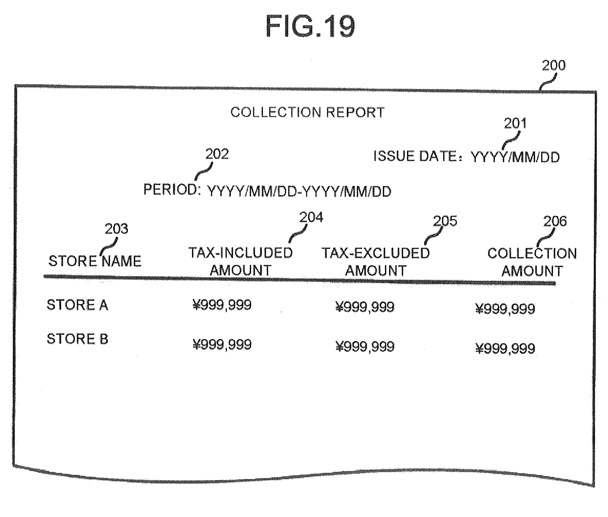

Further, in the tax exemption processing system 1 of the present embodiment, the data of the data table 64 is sent from the settlement terminal 60 to the management server 31. The management server 31 totals the amount required to be collected from each tax-free store for, for example, one month on the basis of the data of the data table 64. Specifically, the management server 31 totals the taxable amount by each store code stored in the data table 64 received for the totalization period in the totalization table 36 stored in the auxiliary storage device 314. If the totalization period is ended, the management server 31 has a function of issuing the report on which the collected amount for each tax-free store is recorded on the basis of the data in the totalization table 36. Hereinafter, the function of issuing the report is described with reference to Fig. 18 and Fig. 19.

Fig. 18 is a flowchart illustrating main procedures of an interruption processing executed by the CPU 311 of the management server 31 according to a control program. The content of the processing described later is an example, and various processing that can obtain the same result can be properly used.

Each time the date clocked by the clock section 315 is updated to the next day, the CPU 311 starts the flowchart in Fig. 18. First, the CPU 311 determines whether or not there is the next day of the date of the totalization termination day which is coincident with the date clocked by the clock section 315 in the totalization table 36 stored in the auxiliary storage device 314 (Act 111). If there is no corresponding totalization table 36 (NO in Act 111), the CPU 311 terminates the interruption processing.

If there is a corresponding totalization table 36 (YES in Act 111), the CPU 311 creates a collection report 200 having a layout shown in Fig. 19 for each tax-free store on the basis of the data in the totalization table 36.

Fig. 19 illustrates an example of the collection report 200 for each tax-free store. An issuing date 201 of the collection report 200 is the date clocked by the clock section 315. A period 202 of the collection report 200 is a range from the totalization start date to the totalization termination date of the totalization table 36. A store name 203, a tax-included amount 204, a tax-excluded amount 205 and the collection amount 206 of the collection report 200 are data in the store code column, data in the tax-included total amount column, data in the tax-excluded total amount column and data in the taxable amount column. The management server 31 includes a conversion table in which the store code and the store name are associated with each other. The CPU 311 converts the store code in the store code column to the store name, using the conversion table.

The CPU 311 sends the data of the collection report 200 for each tax-free store to the settlement terminal 60 (Act 113). Specifically, the CPU 311 notifies the communication interface 316 to send the data of the collection report 200 for the tax-free store to the settlement terminal 60. After receiving the notification, the communication interface 316 sends the data of the collection report 200 for the tax-free store via the network 7 to the settlement terminal 60.

The CPU 601 of the settlement terminal 60 which receives the data of the collection report 200 for the tax-free store notifies the printer interface 610 to output the data to the printer 61. After receiving the notification, the printer interface 610 outputs the data of the collection report 200 for the tax-free store to the printer 61. Through the above processing, the printer 61 is driven, and the collection report 200 for the tax-free store is issued.

Thus, the admitted tax exemption procedure business provider can easily grasp information that how much the taxable amount is collected from each tax-free store 4 through one month period as a unit by browsing the collection report 200 for each tax-free store issued from the settlement terminal 60. Thus, the person in charge of the job at the procedure counter 6 is not required at the time of the paying taxable amount to the nonresident to manage the amount to be collected from each tax-free store 4. The burden of the person in charge of the job is greatly reduced.

Return to the processing in Fig. 18. The CPU 311 notifies the POS terminal 40 in the tax-free store 4 of the taxable amount (collection amount) totaled in the totalization table 36 by each store code of the tax-free store (Act 114). Specifically, the CPU 311 generates the notification command of the collection amount the destination address of which is set to the store code for each store code stored in the totalization table 36 and notifies the printer interface 610 to send the notification command. After receiving the command, the printer interface 610 sends the notification command to the POS terminal 40 at each tax-free store 4 via the network 7.

The CPU 401 of the POS terminal 40 which receives the notification command confirms whether or not the destination address is coincident with the store code of itself. If the destination address is not coincident with the store code of itself, the CPU 401 deletes the notification command. If the destination address is coincident with the store code of itself, the CPU 401 displays the collection amount contained in the notification command on the display 409. Thus, for example, the store manager of the tax-free store 4 can easily grasp the collection period and the collection amount of the taxable amount by confirming the display of the collection amount on the display 409.

Further, in Fig. 19, the CPU 311 may execute the processing in Act 114 first, and then execute the processing in Act 113.

The present invention is not limited to the foregoing embodiment.

For example, in the foregoing embodiment, the selection of issuing either the tax exemption card C or the tax exemption sheet S to the nonresident is set on the reception terminal 50; however, the selection may be omitted. In other words, in the flowchart in Fig. 11, if the result of the determination of the processing in Act 2 is "YES", a control program may be formed to make the flow proceed to the processing in Act 5. Otherwise, if the result of the determination of the processing in Act 2 is "YES", a control program may be formed to make the flow proceed to the processing in Act 6. In the former modification, the operation is limited to the use of the tax exemption card C. Thus, in the POS terminal 40, the reception terminal 50 and the settlement terminal 60, the card readers 412, 508 and 609 may not be required. In the latter modification, the operation is limited to the use of the tax exemption sheet S. Thus, in the POS terminal 40 and the settlement terminal 60, the scanners 411 and 608 may not be required.

Further, in the foregoing embodiment, the reception terminal 50 converts the purchaser code generated according to the passport number and the date and time information to the barcode and prints the barcode representing the purchaser code on the tax exemption sheet S; however, the reception terminal 50 includes a card reader/writer instead of the card reader 508 and may record the purchaser code generated according to the passport number and the date and time information on the tax exemption card C. Similarly, the reception terminal 50 includes a random number generator to generate a unique purchaser code through a random number and may issue the tax exemption sheet S on which the barcode of the purchaser code is printed.

Further, in the foregoing embodiment, a case in which the collection report 200 for each tax-free store is issued from the settlement terminal 60 is illustrated; however, the issuing machine of the collection report 200 for each tax-free store is not limited to the settlement terminal 60. For example, the collection report 200 for each tax-free store may be issued from the POS terminal 40 of each tax-free store. Otherwise, the collection report 200 for each tax-free store may be issued from the management server 31 by connecting a printer to the management server 31.

Further, in the foregoing embodiment, a function as a storage device is applied to the management server 31; however, for example, the function as a storage device may also be applied to the reception terminal 50 or the settlement terminal 60 other than the management server 31.

Further, in the foregoing embodiment, a case in which the total amount of the applicable tax levied on the taxable commodities is refunded is described; however, even a case in which a part of the amount of the applicable tax is refunded is possible by changing a calculation method of the refund amount. Further, the amount of the tax exemption point serving as a reference of the tax exemption amount is not limited to the amount of the embodiment.

Further, the transfer of the POS terminal 40, the reception terminal 50 and the settlement terminal 60 is generally carried out in a state in which a program such as a control program is stored in the ROM. However, the present embodiment is not limited to this and the control program transferred separately from a computer device may be written into a writable storage device included in the computer device according to an operation of a user. The transfer of the control program is recorded in a removable recording medium or can be carried out by communication via a network. If the recording medium like a CD-ROM, a memory card and the like can store the program and can be read by a device, the form thereof is not limited. Furthermore, functions obtained by installation or downloading of the program may be realized through cooperation with an OS (Operating System) inside the device.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope and framework of the invention.

## Claims

1. A tax exemption processing system, comprising: an information processing apparatus and a storage device, wherein
the storage device includes:
a purchaser data file configured to store information relating to a sales of a commodity purchased by a purchaser identified by a purchaser code and a store code for identifying a tax-free store at which the commodity is purchased in association with the purchaser code; and
the information processing apparatus includes:
a first reception module configured to receive from the storage device the purchaser code of the purchaser who receives a refund on the commodity purchased;
a second reception module configured to receive the purchaser data file associated with the purchaser code received by the first reception module from the storage device;
a calculation module configured to calculate a taxable amount for each tax-free store based on the information relating to the sales of the commodity in the purchaser data file received by the second reception module; and
an output module configured to output the taxable amount calculated for each tax-free store by the calculation module.

2. The tax exemption processing system according to claim 1, wherein
the output module is equipped with a module configured to send a data indicating the taxable amount calculated for each tax-free store to the storage device; and
the storage device is further equipped with a totalization module configured to total the taxable amount for a prescribed period by each tax-free store according to the data sent from the information processing apparatus.

3. The tax exemption processing system according to claim 2, further comprising an issuing module configured to issue a collection report indicating the taxable amount which is collected from each tax-free store based on the data totaled by the totalization module.

4. An information processing apparatus, comprising:
a first reception module configured to receive a purchaser code for identifying a purchaser who receives a refund on a commodity purchased;
a second reception module configured to receive a purchaser data file associated with the purchaser code received by the first reception module from a storage device which includes the purchaser data file in which information relating to a sales of the commodity purchased by the purchaser identified by the purchaser code is stored together with a store code for identifying a tax-free store at which the commodity is purchased in association with the purchaser code;
a calculation module configured to calculate a taxable amount for each tax-free store based on the information relating to the sales of the commodity in the purchaser data file received by the second reception module; and
an output module configured to output the taxable amount calculated by each tax-free store by the calculation module.

5. The information processing apparatus according to claim 4, wherein
the output module is equipped with a module configured to send a data indicating the taxable amount calculated for each tax-free store to the storage device.

6. A method for simplifying the management of taxable amount, including:
receiving a purchaser code for identifying a purchaser who receives a refund on a commodity purchased;
receiving a purchaser data file, associated with the received purchaser code, in which information relating to a sales of the commodity purchased by the purchaser identified by the purchaser code is stored together with a store code for identifying a tax-free store at which the commodity is purchased in association with the purchaser code;
calculating a taxable amount for each tax-free store based on information relating to the sales of the commodity in the received purchaser data file; and
outputting the taxable amount calculated for each tax-free store.
